# EUROPEAN PATENT SPECIFICATION

(11) **EP 3 427 568 B1**
(45) Date of publication and mention of the grant of the patent: **30.09.2020**
(21) Application number: 18182929.2
(22) Date of filing: 06.07.2017
(51) Int. Cl.: A01F 15/08, G09F 3/00, G06K 19/02, G09F 3/14, G09F 3/20

(54) **METHOD FOR ASSEMBLING A BALE TAG AND TWINE ASSEMBLY**
VERFAHREN ZUR MONTAGE EINER BALLENETIKETT- UND FADENANORDNUNG
PROCÉDÉ D'ASSEMBLAGE D'UN ENSEMBLE ÉTIQUETTE DE BALLES ET FICELLE

(30) Priority: 12.07.2016 US 201615207958
(43) Date of publication of application: 16.01.2019
(62) Divisional of application: 17180074.1
(73) Proprietor: Deere & Company, Moline, IL 61265 (US)
(72) Inventor: Lang, Eric, 68163 Mannheim (DE); Derscheid, Daniel, 68163 Mannheim (DE)
(74) Representative: Reichert, Christian

(56) References cited:
- US-A- 4 636 271
- US-A1- 2007 175 341
- US-A1- 2007 240 389
- US-B2- 7 717 149

## Description

### Field of the Disclosure

The present disclosure relates to a work machine for baling crop, and more particularly to a system and method of identification tagging of baled crop.

### Background

Hay and foraging equipment are utilized in the processing of plant material and include mowers, conditioners, flail choppers, windrowers, and balers for both dry and silage uses.

The hay system, such as a square baler, includes a pickup mechanism, which picks crop material from the ground and supplies it to a bale-forming chamber. The bale-forming chamber receives the crop material and includes a plunger or piston that applies an axial force against an accumulation of the crop material to form a substantially square-shaped bale. The plunger or piston can further apply a force to a face of the bale to further densify the bale. Once the bale reaches a certain or desired density, the bale may be pushed and extruded out the rear of the baler. US 2007 / 240 389 A1 discloses a binding material including at least one electronic memory medium integrated in the binding material. Thus, the memory medium is incorporated with the bale when the bale is bound, and that it can be removed from the bale when the binding material is removed from the bale.

### Summary

According to the invention, a method is provided for assembling a bale tag and twine assembly to a baled crop during a baling process. The method includes providing the bale tag having a body with a first end and a second end, and a piece of twine having a defined length; indicating at a location on the bale tag an identification indicia that corresponds to the bale tag; coupling the bale tag to the twine before executing the baling process; forming the baled crop during execution of the baling process; and assembling the bale tag and twine assembly to the baled crop.

The bale tag includes an elongated body having a first end and a second end, the body defining a bore therethrough for receiving a piece of twine.

A first portion of the body is disposed at the first end a second portion of the body is disposed at the second end and a third portion of the body is disposed between the first portion and the second portion, wherein, the first portion is tapered at a first taper angle from a location adjoining the third portion to the first end, the second portion being tapered at a second taper angle from a location adjoining the third portion to the second end and the third portion comprises a substantially constant width.

In one embodiment of the disclosure, the first portion, the second portion, and the third portion of the bale tag each include a length. The length of the first portion is greater than the length of the second portion, and the length of the third portion is greater than the length of the second portion. In a second example, the bore includes a diameter, the first end of the body includes a first width, and the second end of the body comprises a second width.

Here, the diameter is approximately the same as the first width and the second width. In a third example of this embodiment, the body is formed of nylon, a polymer, an elastomer, or a combination thereof.

In another example, the bale tag includes an identification indicia disposed on the body, wherein the identification indicia comprises a bar code, a quick response code, an identification number, an alpha-numeric code, a color, or an embedded radio-frequency identification (RFID) chip and antenna. In a further example, the first taper angle is less than the second taper angle. In yet a further example, the first portion, the second portion, and the third portion each include a length, the length of the first portion and the second portion are approximately the same.

In one example of this embodiment, the coupling step includes inserting the twine through a bore defined in the body of the bale tag, where the bale tag substantially surrounds the twine. Moreover, the method may include adhering the bale tag to the twine to limit movement of the bale tag along the length of the twine.

In another example of this embodiment, the method may include visually indicating on the twine the location where the bale tag is coupled to the twine. The visually indicating step may include marking a color or other visual identifier on the twine to assist with locating the bale tag. In a fifth example, the assembling step may include tying a first end of the twine to a second end thereof, where a knot is formed during the typing step. In doing so, the knot defines an outer diameter and the bale tag defines an outer width. The outer width may be less than the outer diameter.

In a further example, the method may include providing a second bale tag having a second identification indicia that corresponds to the second bale tag, the second identification indicia being different from the identification indicia of the first bale tag; and coupling the second bale tag to the twine at a location spaced from the first bale tag before executing the baling process.

In a further embodiment of this disclosure, a method is provided for producing a bale tag and twine assembly for a baled crop formed during a baling process. The method includes providing a plurality of bale tags, where each of the plurality of bale tags includes a body and a unique identification indicia associated with the corresponding bale tag; coupling a first bale tag of the plurality of bale tags to a piece of twine having a defined length; coupling a second bale tag of the plurality of bale tags to the piece of twine at a location spaced from the first bale tag; and producing the bale tag and twine assembly.

Moreover, the coupling steps are executed before the baling process.

In one example of this embodiment, the enveloping process may include providing a bore defined through the body of each of the plurality of bale tags; inserting the twine into the bore; and pulling the twine through the bore so that each of the plurality of bale tags surround the twine. In a second example, the method may include fastening each bale tag to the twine to limit movement thereof relative to the twine. In a third example, during the baling process the twine is cut at a location along its length and tied to the baled crop. At least one of the plurality of bale tags is assembled to the baled crop.

### Brief Description of the Drawings

The above-mentioned aspects of the present invention and the manner of obtaining them will become more apparent and the invention itself will be better understood by reference to the following description of the embodiments of the invention, taken in conjunction with the accompanying drawings, wherein:
Fig. 1A is a perspective view of an example baler towed by an agricultural vehicle;
Fig. 1B is a perspective view of the baler of Fig. 1, which portions of the cover of the baler removed;
Fig. 2 is a perspective view of a baled crop;
Fig. 3 is a side view of a bale tag;
Fig. 4 is a cross-sectional view of the bale tag of Fig. 3;
Fig. 5 is a side view of another bale tag, representing background art not falling within the claims;
Fig. 6 is a schematic view of the bale tag of Fig. 3 and a twine knot;
Fig. 7 is a side view and cross-sectional view of a combination of twine and a bale tag, representing background art not falling within the claims; and
Fig. 8 is a side view and cross-sectional view of another combination of twine and a bale tag, representing background art not falling within the claims;

### Detailed Description

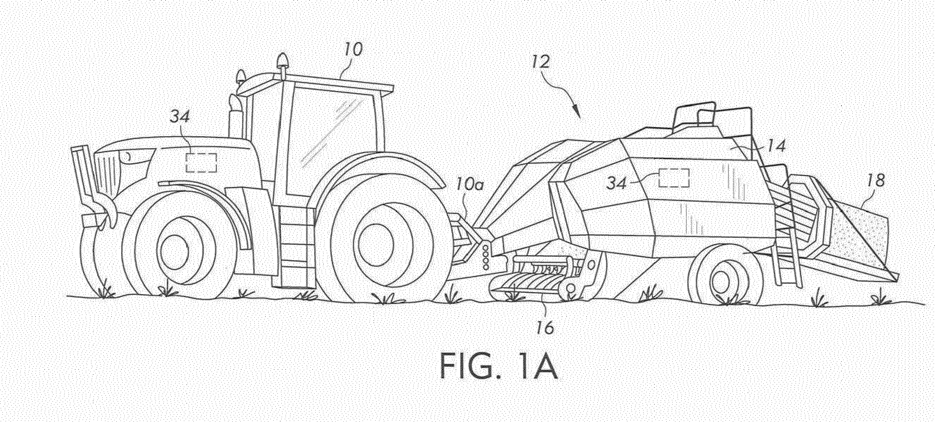

The embodiments of the present disclosure described below are not intended to be exhaustive or to limit the disclosure to the precise forms disclosed in the following detailed description. Rather, the embodiments are chosen and described so that others skilled in the art may appreciate and understand the principles and practices of the present disclosure. Referring now to Fig. 1A, large square baler 12 may be towed across a field by agricultural vehicle 10. (It will be understood that various other configurations are also possible, For example, the disclosed sensor assembly and method may be utilized with a variety of balers or other equipment.) Baler 12 may include housing 14, which may generally shield various internal components of baler 12. As baler 12 moves across a field (e.g., as towed by vehicle 10 via connection 10a) and encounters a windrow or other arrangement of material (not shown), pick-up assembly 16 may gather the material and move it up and into housing 14 for processing. As a result of this processing, as described in greater detail below, bale 18 may be formed and may be ejected from the rear of baler 12.

In various embodiments, baler 12 (or vehicle 10) may include one or more computing devices, such as controller 34. Various alternative locations for controller 34 are depicted in Fig. 1A, including locations on vehicle 10 and baler 12. It will be understood that one or more controllers 34 may be employed and that controller 34 may be mounted at various locations on vehicle 10, baler 12, or elsewhere. Controller 34 may be a hardware, software, or hardware and software computing device, and may be configured to execute various computational and control functionality with respect to baler 12 (or vehicle 10). As such, controller 34 may be in electronic or other communication with various components and devices of baler 12 (or vehicle 10). For example, controller 34 within baler 12 may be in electronic communication with various actuators, sensors, and other devices within (or outside of) baler 12. Controller 34 may communicate with various other components (including other controllers) in various known ways, including wirelessly. The baler 12 and related embodiments thereto are further described in U.S. Publication Ser. No. 2015/0208586.

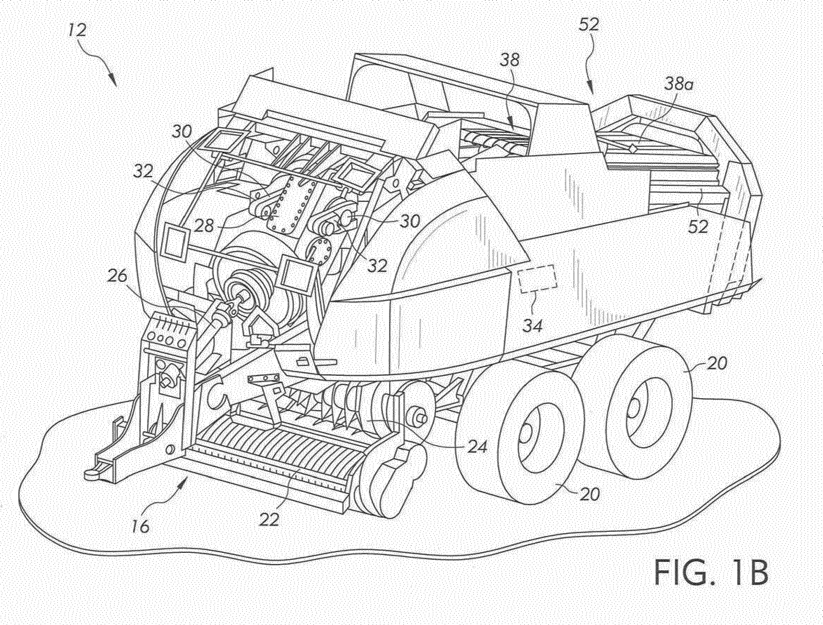

Referring now also to Fig. 1B, various internal components of an example configuration of baler 12 are depicted. It will be understood that various other configurations may also be possible. Pick-up assembly 16, for example, may include rotary tine pick-up 22 for gathering crop material from windrow (not shown). Material gathered by rotary tine pick-up 22 may be routed to feed auger 24, which may further direct the material toward baling chamber 38 for compaction into a baler.

Baling chamber 38, which is depicted with upper panel 38a in place, may be a chamber of generally rectangular cross section extending axially along baler 12 in a generally front-to-back direction. Chamber 38 may be configured in various ways to receive material gathered by pick-up assembly 16, hold the material for compaction, then release the resulting bale from the back (or other portion) of baler 12 (e.g., as depicted for bale 18, in Fig. 1A).

Baling chamber 38 may be bounded on one or more sides (e.g., to the right and left, from the perspective of the forward direction of baler 12) by tension panels 52, which may be movable in order to control various aspects of a baling operation. For example, various actuators (not shown) may be mounted to baler 12 and one or more of tension panels 52 such that the actuators may cause tension panels 52 to vary the cross-sectional area of baling chamber 38. In certain embodiments, for example, hydraulic pistons (not shown) may be configured to pivot tension panels 52 into (or out of) baling chamber 38, in order to decrease (or increase) the cross-sectional area of chamber 38 and thereby increase (or decrease) the force required to push a given amount of compacted crop material through chamber 38 (e.g., the pressure required for plunger 54 to move the bale through chamber 38). In this way, for example, tension panels 52 may be utilized to vary the density of the resulting bale 18. Compaction of crop material within baling chamber 38 may be driven in various ways. For example, as depicted in the various figures, plunger 54 (not shown in Fig. 1B) may be driven by a crank arm assembly. As depicted in Fig. 1B, power take off ("PTO") connection shaft 26 may be configured to receive rotational power from PTO shaft of vehicle 10 (e.g., via connection 10a, as shown in Fig. 1A). In certain embodiments, accordingly, whenever the PTO output of vehicle 10 is engaged, PTO connection shaft 26 may be receiving rotational power from vehicle 10. (It will be understood that various other configurations are also possible, such as configurations in which shaft 26 (or various other components of baler 12) may be selectively disengaged even if the PTO output of vehicle 10 is engaged.)

In various embodiments, PTO connection shaft 26 may provide rotational power to gear box 28. Through one or more internal gears (not shown in Fig. 1B), this power may be routed through gear box 28 to crank arms 30, which may be connected to plunger 54 via connecting rod(s) 32. (Connecting rods 32 have been partially removed in Fig. 1B, for clarity of presentation.) In this way, rotational power may be provided from vehicle 10 to crank arms 30. Crank arms 30, accordingly, may then drive the reciprocating motion of plunger 54, via connecting rod(s) 32, in order to compact material within baling chamber 38 into formed bales 18. It will be understood that various other configurations may be possible. For example, in certain embodiments, gear box 28 may be powered by an electrical or hydraulic machine rather than by direct mechanical power from a PTO interface.

In various embodiments, rotation of PTO connection shaft 26 (e.g., as powered by the PTO output of vehicle 10) may additionally (or alternatively) provide rotational power to various components of baler 12. For example, the motion of various components of pick-up assembly 16, various tying mechanisms (not shown), pumps for hydraulic actuation of tension panels 38 (not shown), and so on, may be driven via power connections of various known types (e.g., chain or belt drives) to PTO connection shaft 26 or associated components.

A twine tying arrangement (not shown) may be provided for wrapping and tying multiple loops of twine about a completed bale. The bale tying cycle may be initiated by a bale length sensor arrangement (not shown) including a toothed metering wheel (not shown) mounted on a shaft (not shown) extending horizontally across and being rotatably mounted to the top of the baling chamber 38. The metering wheel may have a toothed periphery which extends into the baling chamber 38 and is contacted by a forming bale so as to be rotated as the bale grows in length. The rotation of the metering wheel is sensed and converted into a signal representing bale length, with a control signal being sent to initiate the tying cycle when the forming bale reaches a length corresponding to a desired bale length. An example of a twine tensioner or knotter system is described in U.S. Patent No. 8,617,834 to Deere & Company, the disclosure of which is hereby incorporated by reference.

As the baled crop is formed in the baler 100, certain parameters or qualities of the crop may be measured or determined, e.g., moisture quality, baling time, bale weight, bale length, etc. The ability to trace or track baling parameters can be useful to an end user. Baled products, such as hay or silage, may be fed to livestock, and the quality of the feed may be important to the diet of the livestock. To achieve this traceability of the baled product, a tagging system may be employed for storing or otherwise retaining the parameters or quality of the crop. For example, a higher quality feed may be fed to certain livestock, whereas feed with lesser quality may go to a different type of livestock (e.g., dairy cow versus a dry cow).

In the organic food industry, for example, traceability of feed quality is desired. Many in the industry want to know where food products (such as milk) come from, what the livestock ate while it was being raised, etc. As a result, the tagging system may be employed in the baling process to provide this type of information to the consumer.

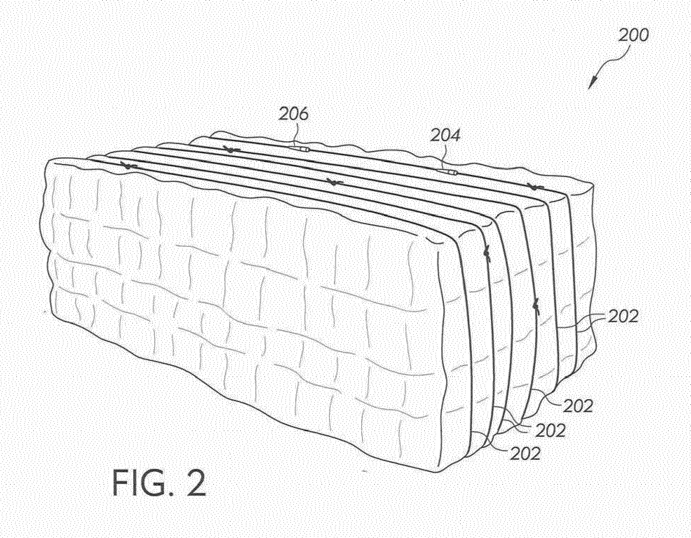

Referring now to Fig. 2 of the present disclosure, one embodiment of a baled crop 200 is shown. In this embodiment, a bale of hay 200 is shown formed in a rectangular shape with twine 202 wrapped around and fastened about the crop. The twine 202 may be fastened or tied along the length of the crop 200, and there may be one or more pieces of twine 202 coupled thereto. As also shown, a first bale tag 204 and a second bale tag 206 may be coupled to the twine 202 at different locations along the length thereof. Each bale tag may include a different identification number, or in some instances, the identification number may be the same. Moreover, in at least one embodiment, only one bale tag may be coupled to the twine 202.

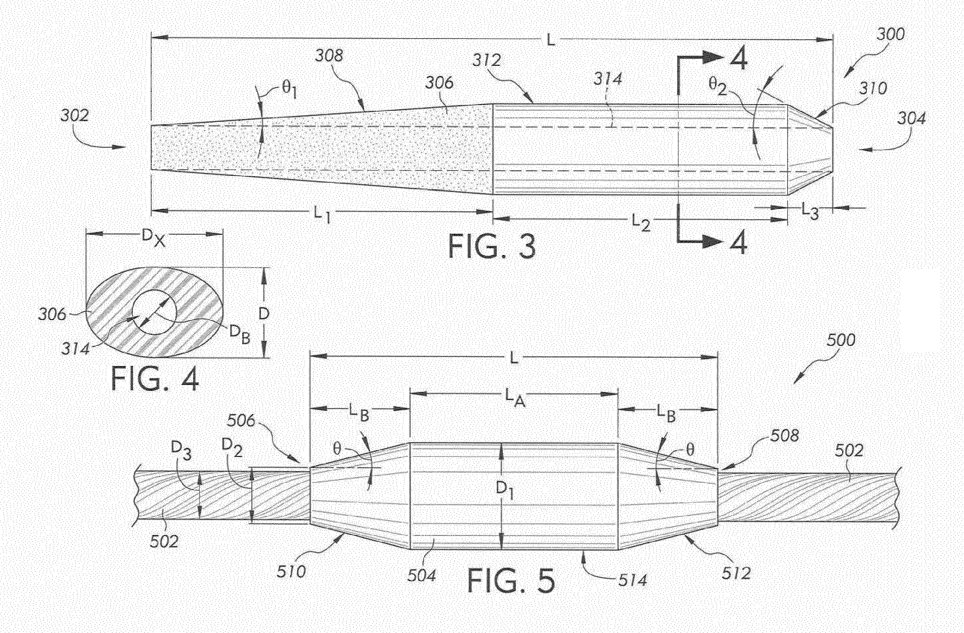

In at least one embodiment, the bale tag may be coupled to or integrated into the twine before the bale is made. This may happen, for example, by the twine manufacturer to improve or simplify the ease of use during the baling process (i.e., tagging issues may be avoided). The bale tag may be coupled to the twine via an adhesive, mechanical clamping or coupling, heat, or otherwise integrated in other known manners. In Figs. 3 and 4, an example of a bale tag 300 is shown. The bale tag 300 may be formed by an elongated body 306 having an overall length, L, defined between a first end 302 and a second end 304. The bale tag 300 may be formed of a nylon, polymer or elastomer material.

In Fig. 3, the body 306 may include a first portion 308, a second portion 310, and a third portion 312. The first portion 308 and the second portion 310 may be tapered, whereas the third portion 312 is disposed between the first and second portions. For instance, the first portion 308 may taper from where it adjoins the third portion 312 to the first end 302. Likewise, the second portion 310 may taper from where it adjoins the third portion 312 to the second end 304.

A central bore or channel 314 is defined in the body 306 from the first end 302 to the second end 304. The bore or channel 314 may be sized such that twine can pass therethrough. The bore or channel 314 may have an outer diameter, D_{B}, whereas the body 306 may have a larger dimension, D. As shown in Fig. 4, the overall cross-section of the body 306 may be oval and the cross-section of the bore or channel 314 is circular. In other embodiments, the cross-section of the body 306 and bore 314 may take a different shape including circular, oval, square, rectangular, polygonal, etc. In Fig. 4, the oval-shaped body 306 may have a first dimension D and a second dimension, Dₓ. As shown, the second dimension, Dₓ, may be greater than the first dimension, D.

The first portion 308 may have a defined length, L₁, as shown in Fig. 3. The combined length of the second portion 310 and third portion 312 may be the same as the length of the first portion 308, although this is only one example. In other examples, the lengths may differ. In the example of Fig. 3, the length of the second portion is L₃ and the length of the second portion is L₂. Here, the length L₂ is closer to the length L₁ of the first portion 308 than the length L₃ of the second portion 310.

As noted above, the first portion 308 of the bale tag 300 tapers from the third portion 312 to the first end 302. The taper angle, Θ₁, may be less than 20° in one example. In a different example, the angle may be less than 10°. Further, in a third example, the angle may be less than 5°. As shown in Fig. 3, the second portion 310 may also taper from the third portion 312 to the second end 304. Here, the taper angle, Θ₂, may be less than 60°. In another example, the taper angle, Θ₂, may be less than 45°. Moreover, in a further example, the taper angle, Θ₂, may be greater than the first taper angle, Θ₁, but less than 35°. In the embodiment of Figs. 3 and 4, the bale tag 300 may be designed such that the first taper angle, Θ₁, is less than the second taper angle, Θ₂. In other embodiments, however, this may be different.

In Fig. 5, for example, a second bale tag 500 is shown. The second bale tag 500 is structured similar to the first bale tag 300 of Fig. 3 in that each tag envelopes or is designed in a collar-like fashion for coupling to a piece of twine 502. As shown, the tag 500 includes a bore or channel through which the twine 502 passes when coupled. The tag 500 may be adhered or otherwise fastened to the twine 502 to limit its movement along a length of the twine 502.

The bale tag 500 may include a body 504 having a first end 506 and a second end 506. The body 506 may have a smaller dimension at the first end 506 and second end 508, and a larger dimension at a location therebetween. For example, in Fig. 5, the tag 500 may include a first portion 510 near the first end 502, a second portion 512 near the second end 504, and a third portion 514 disposed between the first portion 510 and the second portion 512. In this embodiment, the bale tag 500 has an overall length of L. The first portion 510 and the second portion 512 may have a length, L_{B}, and the third portion 514 may have a length, L_{A}. In a non-limiting example, the overall length, L, of the bale tag 500 may be approximately 30mm. The length, L_{B}, of the first and second portions may be approximately 5mm, and the length, L_{A}, of the third portion may be approximately 20mm. This, however, is only an example and is not intended to limit the scope of this disclosure. The size of the bale tag may differ in other embodiments, and thus the lengths in Figs. 3 and 5 are non-limiting.

As previously described, the body 504 in Fig. 5 may define an inner bore or channel through which the twine 502 is fed through during the twine manufacturing process. The twine 502 may have an outer diameter, D₃, as shown in Fig. 5. The third portion 514 may have an outer diameter or dimension, D₁, and the first and second portions may have an outer diameter or dimension, D₂. Each of the first and second dimensions, D₁ and D₂, are greater than the outer diameter, D₃, of the twine 502. Moreover, the first portion 510 and second portion 512 may taper from the first dimension, D1, to the respective first end 506 and second 508. As shown in Fig. 5, the taper angle, Θ, may be less than 45° in one embodiment. In a second embodiment, the taper angle, Θ, may be less than 30°. In a further embodiment, the taper angle, Θ, may be less than 25°. In other embodiments, however, the taper angle may be less than 90°.

In a non-limiting example, the twine 502 may have a diameter of approximately 4mm. The first or largest dimension, D₁, of the bale tag 500 may be approximately 10mm, and the second or smallest dimension, D₂, may be approximately 6mm. This, however, is only an example and is not intended to limit the scope of this disclosure. The size of the bale tag may differ in other embodiments, and thus the dimensions or diameters in Figs. 3 and 5 are non-limiting.

As previously described, the material of the bale tag can vary depending upon the embodiment. The material may include nylon, a polymer, or an elastomer. In Fig. 5, for example, the bale tag 500 may be formed of polypropylene. In Fig. 3, the first portion 308 of the bale tag 300 may be formed of a flexible yet resilient material, whereas the second portion 310 and third portion 312 may be formed of a more rigid or semi-rigid material compared to the first portion 308. In this embodiment, the second and third portions may be formed of a more rigid material for encasing a radio-frequency identification (RFID) chip and an antenna (not shown). In other embodiments, visual identification mechanisms such as a quick response (QR) code, bar code, identification number, alpha-numeric code, or color may be printed or formed on the second and third portions of the bale tag 300.

The outer surface of the third portion 312 of the bale tag 300 may include a low friction surface. This low friction outer surface may also be the case with the first and second portions as well. In the embodiment of Fig. 4, the size of the bale tag 300 includes at least two dimensions, D and Dₓ. The larger dimension, Dₓ, is sized so that a bar code, for example, may be affixed or displayed on the surface of the tag.

While the bale tag 300 in Fig. 3 may include various shapes and sizes, it may be adhered to the twine to limit its movement therealong. Moreover, the twine manufacture may color-code the twine to provide a visual identification as to a location of the bale tag on the twine. For example, the twine may include a first color indicative of a location where a bale tag is located on the twine, and the rest of the twine may be a second color where no bale tag is located. This allows for easy location of the bale tag after the baled crop is extruded from the rear of the baler.

In Figs. 3-5, the bale tag is depicted as including tapered ends with a non-tapered section therebetween. When coupled to or integrated into the twine, the bale tag may be coupled to the twine such that the first portion functions as the leading end and the second end functions as the trailing end. With the tapered, leading end, the bale tag may pass more easily through the twine tensioners compared to a tag that does not include a leading tapered end. Thus, this embodiment may take the form, for example, of the bale tag 300 in Fig. 3 without having the second portion 310. In other words, the bale tag 300 of Fig. 3 may be redesigned to include only the tapered, first portion 308 and the non-tapered third portion 312, where the first portion 308 passes through the twine tensioners before the third portion 312.

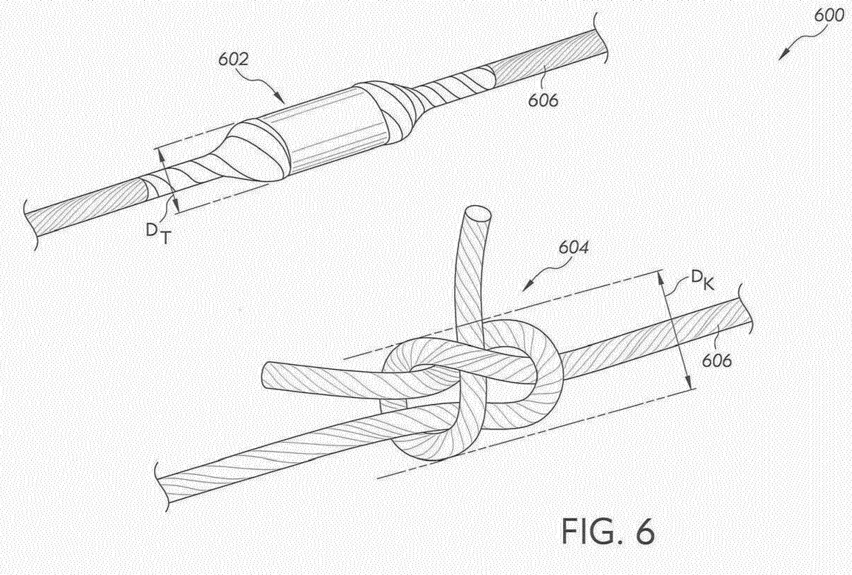

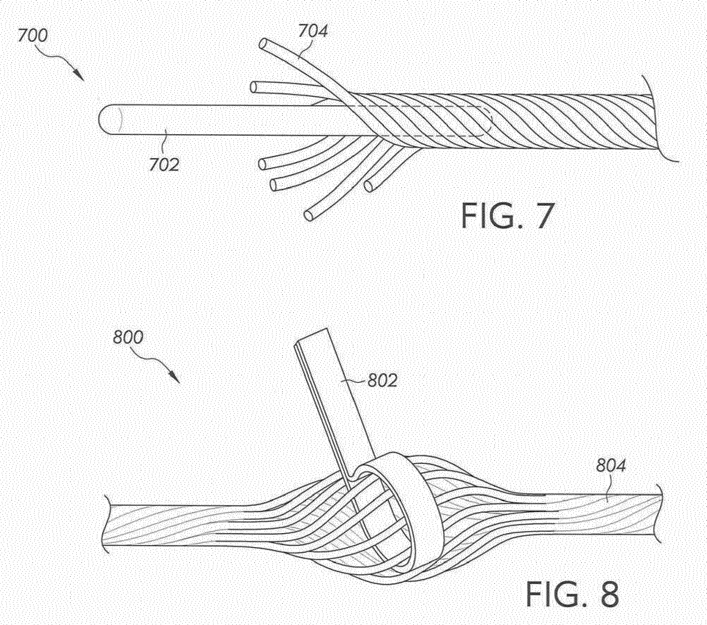

During the baling process, opposite ends of a piece of twine may be tied into a knot. As shown in Fig. 6, a comparison 600 between a bale tag 602 and a twine knot 604 is shown. Here, it may be desirable for the outer dimension of the bale tag 602 to be less than an outer dimension of the bale knot 604. As shown, the bale knot 604 may have an outer dimension that is greater than an outer diameter of a piece of twine 606. As the twine is fed through the baler, wrapped around the baled crop, and tied thereto, the bale tag 602 may pass through tight spaces or around tight corners such that its relatively smaller outer dimension is desirable. This can reduce possible damage to the bale tag during the baling process. Moreover, the flexible first portion 308 may pass through the tight spaces or corners first before the more rigid second and third portions to provide better protection to the tag. Another example of a bale tag and twine arrangement 700 is shown in Fig. 7. Here, a bale tag 702 may be inserted into a piece of twine 704. For example, the bale tag 702 may be embedded into the fibers of the twine 704. In other words, the twine 704 surrounds or encloses the bale tag 702.

In a further example, another bale tag and twine arrangement 800 is shown in Fig. 8. The arrangement 800 may include a bale tag 802 and a piece of twine 804. As shown, the bale tag 802 and twine 804 are intertwined with one another for coupling the bale tag 802 to the twine 804. In other words, the bale tag 802 may be looped or intertwined between the fibers of the twine 804.

Other arrangements may be possible for coupling a bale tag to twine besides the illustrated embodiments. For instance, a bale tag may be clamped, snapped, fastened, adhered, or coupled using any number of fasteners. In at least one embodiment, the bale tag is coupled to the twine in such a way that there is limited movement of the tag along the length of the twine. In other embodiments, however, the bale tag may freely move along the twine.

In a simplified bale forming process, twine may be provided in the form of a roll or other manner by a twine manufacturer. In addition, a plurality of bale tags may be provided. Each bale tag may include a unique identification number, a bar code, a QR code, an embedded RFID chip and antenna, etc. The bale tag may take the form of any design including those shown in Figs. 3-6. As the twine is manufactured, one or more of the plurality of bale tags may be coupled to the twine. This may happen in accordance with any of the previously described embodiments, e.g., via an embedding process, an intertwining process, an enveloped process, etc.

During the manufacturing process, the twine may be visually altered at the location at or near each bale tag to provide a means to locate the bale tag once it is disposed about the baled crop. The visual alteration may include a coloring (e.g., paint) process or any other known method.

Once the bale tags have been assembled to the twine, the twine may be delivered and installed in a baler according to any known method. During the baling process, crop may be collected by the baler according to known methods and the baled crop is formed in the baler, e.g., the baling chamber. Once the baled crop is formed, the twine may be assembled and tied according to any known process. As the twine is assembled to the baled crop, one or more bale tags may be disposed along the crop. If the twine is visually altered at locations near or at the bale tag, the location of the bale tag may be readily identified via the twine. In any event, the bale tags are already assembled to the baled crop once the twine is tied. The one or more bale tags may thus be used for associating certain information about the baled crop to an end user, including moisture of the crop, length or weight of the crop, etc. Moreover, other information such as about the twine may also be associated to the baled crop via the bale tag.

## Claims

1. A method of assembling a bale tag (300, 500, 602, 702, 802) and twine assembly to a baled crop during a baling process, comprising:
providing the bale tag (300, 500, 602, 702, 802) having a body (306, 504) with a first end (302, 506) and a second end (304, 508), and a piece of twine (502, 606, 704, 804) having a defined length;
indicating at a location on the bale tag (300, 500, 602, 702, 802) an identification indicia that corresponds to the bale tag (300, 500, 602, 702, 802);
orienting the first end (302, 506) of the bale tag (300, 500, 602, 702, 802) relative to the twine (502, 606, 704, 804) such that the first end (302, 506) of the bale tag (300, 500, 602, 702, 802) is to be passed through a twine tensioner during the baling process before the second end (304, 508);
coupling the bale tag (300, 500, 602, 702, 802) to the twine (502, 606, 704, 804) before executing the baling process;
forming the baled crop during execution of the baling process; and
assembling the bale tag (300, 500, 602, 702, 802) and twine assembly to the baled crop
**characterized in that**
the bale tag (300, 500) comprises:
an elongated body (306, 504) having a first end (302, 506) and a second end (304, 508), the body (306, 504) defining a bore (314) therethrough for receiving a piece of twine (502, 606, 704, 804);
a first portion (308, 510) of the body (306, 504) disposed at the first end (302, 506);
a second portion (310, 512) of the body (306, 504) disposed at the second end (304, 508); and
a third portion (312, 514) of the body (306, 504) disposed between the first portion (308, 510) and the second portion (310, 512),
wherein, the first portion (308, 510) is tapered at a first taper angle from a location adjoining the third portion (312, 514) to the first end (302, 506), the second portion (310, 512) being tapered at a second taper angle from a location adjoining the third portion (312, 514) to the second end (304, 508) and the third portion (312, 514) comprises a substantially constant width.

2. The method of claim 1, wherein:
the bore (314) comprises a diameter (DB);
the first end (302, 506) of the body (306, 504) comprises a first width; and
the second end (304, 508) of the body (306, 504) comprises a second width;
further wherein, the diameter (DB) is approximately the same as the first width and less than the second width.

3. The method of one of the claims 1 to 2, wherein the bale tag (300, 500) further comprises an identification indicia disposed on the body (306, 504),
wherein the identification indicia comprises a bar code, a quick response code, an identification number, an alpha-numeric code, a color, or an embedded radio-frequency identification (RFID) chip and antenna.

4. The method of one of the claims 1 to 3, wherein the first portion (308, 510), the second portion (310, 512), and the third portion (312, 514) each include a length, the length of the first portion (308, 510) being greater than the length of the second portion (310, 512), and the length of the third portion (312, 514) being greater than the length of the second portion (310, 512).

5. The method of one of the claims 1 to 4, wherein the first taper angle is less than the second taper angle.

6. The method of one of the claims 1 to 5, wherein the coupling step comprises inserting the twine (502, 606) through the bore (314) defined in the body (306, 504) of the bale tag (300, 500), where the bale tag (300, 500) substantially surrounds the twine (502, 606).

7. The method of one of the claims 1 to 6, further comprising adhering the bale tag (300, 500, 602) to the twine (502, 606) to limit movement of the bale tag (300, 500, 602) along the length of the twine (502, 606).

8. The method of claim 1, further comprising visually indicating on the twine (804) the location where the bale tag (802) is coupled to the twine (804).

9. The method of one of the claims 1 to 7, wherein the assembling step comprises tying a first end of the twine (502, 606, 704, 804) to a second end thereof, where a knot (604) is formed during the tying step, wherein the knot (604) comprises an outer diameter (DK) and the bale tag (300, 500, 602, 702) comprises an outer width, the outer width (DT) being less than the outer diameter (DK).

10. The method of one of the claims 1 to 9, further comprising:
providing a second bale tag (300, 500, 602, 702, 802) having a second identification indicia that corresponds to the second bale tag (300, 500, 602, 702, 802), the second identification indicia being different from the identification indicia of the first bale tag (300, 500, 602, 702, 802); and
coupling the second bale tag (300, 500, 602, 702, 802) to the twine (502, 606, 704, 804) at a location spaced from the first bale tag (300, 500, 602, 702, 802) before executing the baling process.

11. The method of one of claims 1 to 7, 9 or 10, further comprising orienting a first end (302, 506) of the first and second bale tags (300, 500, 602, 702) relative to the twine (502, 606, 704, 804) such that the first end (302, 506) is to be passed through a twine tensioner before the second end (304, 508) during the baling process.

## Patentansprüche

1. Verfahren zum Befestigen einer Ballenetikett- (300, 500, 602, 702, 802) und -schnuranordnung an einem zu einem Ballen gepressten Erntegut während eines Ballenpressvorgangs, umfassend:
Bereitstellen des Ballenetiketts (300, 500, 602, 702, 802), das einen Körper (306, 504) mit einem ersten Ende (302, 506) und einem zweiten Ende (304, 508) aufweist, und eines Stücks Schnur (502, 606, 704, 804), das eine definierte Länge aufweist,
Anzeigen einer Kennzeichnungsmarkierung, die dem Ballenetikett (300, 500, 602, 702, 802) entspricht, an einer Stelle auf dem Ballenetikett (300, 500, 602, 702, 802),
Ausrichten des ersten Endes (302, 506) des Ballenetiketts (300, 500, 602, 702, 802) relativ zu der Schnur (502, 606, 704, 804) auf eine solche Weise, dass das erste Ende (302, 506) des Ballenetiketts (300, 500, 602, 702, 802) während des Ballenpressvorgangs vor dem zweiten Ende (304, 508) durch eine Schnurspannvorrichtung zu führen ist,
Koppeln des Ballenetiketts (300, 500, 602, 702, 802) mit der Schnur (502, 606, 704, 802) vor der Durchführung des Ballenpressvorgangs,
Ausbilden des zu einem Ballen gepressten Ernteguts während der Durchführung des Ballenpressvorgangs und
Befestigen der Ballenetikett- (300, 500, 602, 702, 802) und -schnuranordnung an dem zu einem Ballen gepressten Erntegut,
**dadurch gekennzeichnet, dass**
das Ballenetikett (300, 500) einen längserstreckten Körper (306, 504) umfasst, der ein erstes Ende (302, 506) und ein zweites Ende (304, 508) aufweist, wobei der Körper (306, 504) eine Bohrung (314) durch denselben definiert, um ein Stück Schnur (502, 606, 704, 804) aufzunehmen,
ein erster Abschnitt (308, 510) des Körpers (306, 504) an dem ersten Ende (302, 506) angeordnet ist,
ein zweiter Abschnitt (310, 512) des Körpers (306, 504) an dem zweiten Ende (304, 508) angeordnet ist und
ein dritter Abschnitt (312, 514) des Körpers (306, 504) zwischen dem ersten Abschnitt (308, 510) und dem zweiten Abschnitt (310, 512) angeordnet ist,
wobei sich der erste Abschnitt (308, 510) mit einem ersten Kegelwinkel von einer Stelle, an der der dritte Abschnitt (312, 514) an das erste Ende (302, 506) angrenzt, verjüngt, sich der zweite Abschnitt (310, 512) mit einem zweiten Kegelwinkel von einer Stelle, an der der dritte Abschnitt (312, 514) an das zweite Ende (304, 508) angrenzt, verjüngt und der dritte Abschnitt (312, 514) eine im Wesentlichen konstante Breite umfasst.

2. Verfahren nach Anspruch 1, wobei:
die Bohrung (314) einen Durchmesser (DB) umfasst,
das erste Ende (302, 506) des Körpers (306, 504) eine erste Breite umfasst und
das zweite Ende (304, 508) des Körpers (306, 504) eine zweite Breite umfasst,
wobei ferner der Durchmesser (DB) annähernd gleich der ersten Breite und kleiner als die zweite Breite ist.

3. Verfahren nach einem der Ansprüche 1 bis 2, wobei das Ballenetikett (300, 500) ferner eine Kennzeichnungsmarkierung umfasst, die auf dem Körper (306, 504) angeordnet ist,
wobei die Kennzeichnungsmarkierung einen Barcode, einen QR-Code, eine Kennzeichnungsnummer, einen alphanumerischen Code, eine Farbe oder einen eingebetteten RFID-Chip und eine RFID-Antenne umfasst.

4. Verfahren nach einem der Ansprüche 1 bis 3, wobei der erste Abschnitt (308, 510), der zweite Abschnitt (310, 512) und der dritte Abschnitt (312, 514) jeweils eine Länge aufweisen, wobei die Länge des ersten Abschnitts (308, 510) größer als die Länge des zweiten Abschnitts (310, 512) ist und die Länge des dritten Abschnitts (312, 514) größer als die Länge des zweiten Abschnitts (310, 512) ist.

5. Verfahren nach einem der Ansprüche 1 bis 4, wobei der erste Kegelwinkel kleiner als der zweite Kegelwinkel ist.

6. Verfahren nach einem der Ansprüche 1 bis 5, wobei der Kopplungsschritt das Einführen der Schnur (502, 606) durch die Bohrung (314), die in dem Körper (306, 504) des Ballenetiketts (300, 500) definiert ist, umfasst, wobei das Ballenetikett (300, 500) im Wesentlichen die Schnur (502, 606) umgibt.

7. Verfahren nach einem der Ansprüche 1 bis 6, ferner umfassend das Ankleben des Ballenetiketts (300, 500, 602) an der Schnur (502, 606), um eine Bewegung des Ballenetiketts (300, 500, 602) entlang der Länge der Schnur (502, 606) zu begrenzen.

8. Verfahren nach Anspruch 1, ferner umfassend das sichtbare Anzeigen der Stelle, an der das Ballenetikett (802) mit der Schnur (804) gekoppelt ist, auf der Schnur (804) .

9. Verfahren nach einem der Ansprüche 1 bis 7, wobei der Befestigungsschritt das Anbinden eines ersten Endes der Schnur (502, 606, 704, 804) an einem zweiten Ende derselben umfasst, wobei während des Anbindeschritts ein Knoten (604) gebildet wird, wobei der Knoten (604) einen Außendurchmesser (DK) umfasst und das Ballenetikett (300, 500, 602, 702) eine Außenbreite umfasst, wobei die Außenbreite (DT) kleiner als der Außendurchmesser (DK) ist.

10. Verfahren nach einem der Ansprüche 1 bis 9, ferner umfassend:
Bereitstellen eines zweiten Ballenetiketts (300, 500, 602, 702, 802), das eine zweite Kennzeichnungsmarkierung aufweist, die dem zweiten Ballenetikett (300, 500, 602, 702, 802) entspricht, wobei sich die zweite Kennzeichnungsmarkierung von der Kennzeichnungsmarkierung des ersten Ballenetiketts (300, 500, 602, 702, 802) unterscheidet, und
Koppeln des zweiten Ballenetiketts (300, 500, 602, 702, 802) mit der Schnur (502, 606, 704, 804) an einer Stelle, die von dem ersten Ballenetikett (300, 500, 602, 702, 802) beabstandet ist, vor der Durchführung des Ballenpressvorgangs.

11. Verfahren nach einem der Ansprüche 1 bis 7, 9 oder 10, ferner umfassend das Ausrichten des ersten Endes (302, 506) des ersten und des zweiten Ballenetiketts (300, 500, 602, 702) relativ zu der Schnur (502, 606, 704, 804) auf eine solche Weise, dass das erste Ende (302, 506) während des Ballenpressvorgangs vor dem zweiten Ende (304, 508) durch eine Schnurspannvorrichtung zu führen ist.

## Revendications

1. Procédé d'assemblage d'un ensemble étiquette de balle (300, 500, 602, 702, 802) et ficelle à une récolte mise en balles pendant un processus de mise en balles, comprenant :
la fourniture de l'étiquette de balle (300, 500, 602, 702, 802) présentant un corps (306, 504) doté d'une première extrémité (302, 506) et d'une deuxième extrémité (304, 508), et un bout de ficelle (502, 606, 704, 804) présentant une longueur définie ;
l'indication, à un emplacement de l'étiquette de balle (300, 500, 602, 702, 802), d'informations d'identification qui correspondent à l'étiquette de balle (300, 500, 602, 702, 802) ;
l'orientation de la première extrémité (302, 506) de l'étiquette de balle (300, 500, 602, 702, 802) par rapport à la ficelle (502, 606, 704, 804) de telle sorte que la première extrémité (302, 506) de l'étiquette de balle (300, 500, 602, 702, 802) doit être menée à travers un tendeur de ficelle pendant le processus de mise en balles avant la deuxième extrémité (304, 508) ;
l'accouplement de l'étiquette de balle (300, 500, 602, 702, 802) à la ficelle (502, 606, 704, 804) avant l'exécution du processus de mise en balles ;
la formation de la récolte mise en balles pendant l'exécution du processus de mise en balles ; et
l'assemblage de l'ensemble étiquette de balle (300, 500, 602, 702, 802) et ficelle à la récolte mise en balles, **caractérisé en ce que**
l'étiquette de balle (300, 500) comprend :
un corps allongé (306, 504) présentant une première extrémité (302, 506) et une deuxième extrémité (304, 508), le corps (306, 504) définissant un alésage (314) à travers celui-ci pour la réception d'un bout de ficelle (502, 606, 704, 804) ;
une première partie (308, 510) du corps (306, 504) disposée à la première extrémité (302, 506) ;
une deuxième partie (310, 512) du corps (306, 504) disposée à la deuxième extrémité (304, 508) ; et
une troisième partie (312, 514) du corps (306, 504) disposée entre la première partie (308, 510) et la deuxième partie (310, 512),
dans lequel la première partie (308, 510) est conique suivant un premier angle de conicité à partir d'un emplacement adjacent à la troisième partie (312, 514) jusqu'à la première extrémité (302, 506), la deuxième partie (310, 512) étant conique suivant un deuxième angle de conicité à partir d'un emplacement adjacent à la troisième partie (312, 514) jusqu'à la deuxième extrémité (304, 508) et la troisième partie (312, 514) présentant une largeur sensiblement constante.

2. Procédé selon la revendication 1, dans lequel :
l'alésage (314) présente un diamètre (DB) ;
la première extrémité (302, 506) du corps (306, 504) présente une première largeur ; et
la deuxième extrémité (304, 508) du corps (306, 504) présente une deuxième largeur ;
en outre dans lequel le diamètre (DB) est approximativement le même que la première largeur et inférieur à la deuxième largeur.

3. Procédé selon l'une des revendications 1 et 2, dans lequel l'étiquette de balle (300, 500) comprend en outre des informations d'identification disposées sur le corps (306, 504),
dans lequel les informations d'identification comprennent un code-barres, un code QR, un numéro d'identification, un code alphanumérique, une couleur ou une puce d'identification par radiofréquence (RFID) intégrée et une antenne.

4. Procédé selon l'une des revendications 1 à 3, dans lequel la première partie (308, 510), la deuxième partie (310, 512) et la troisième partie (312, 514) comportent chacune une longueur, la longueur de la première partie (308, 510) étant supérieure à la longueur de la deuxième partie (310, 512), et la longueur de la troisième partie (312, 514) étant supérieure à la longueur de la deuxième partie (310, 512).

5. Procédé selon l'une des revendications 1 à 4, dans lequel le premier angle de conicité est inférieur au deuxième angle de conicité.

6. Procédé selon l'une des revendications 1 à 5, dans lequel l'étape d'accouplement comprend l'insertion de la ficelle (502, 606) à travers l'alésage (314) défini dans le corps (306, 504) de l'étiquette de balle (300, 500), l'étiquette de balle (300, 500) entourant sensiblement la ficelle (502, 606).

7. Procédé selon l'une des revendications 1 à 6, comprenant en outre l'adhésion de l'étiquette de balle (300, 500, 602) à la ficelle (502, 606) pour limiter le mouvement de l'étiquette de balle (300, 500, 602) le long de la longueur de la ficelle (502, 606).

8. Procédé selon la revendication 1, comprenant en outre l'indication visuelle sur la ficelle (804) de l'emplacement où l'étiquette de balle (802) est accouplée à la ficelle (804).

9. Procédé selon l'une des revendications 1 à 7, dans lequel l'étape d'assemblage comprend l'attache d'une première extrémité de la ficelle (502, 606, 704, 804) à une deuxième extrémité de celle-ci, un nœud (604) étant formé pendant l'étape d'attache, dans lequel le nœud (604) présente un diamètre extérieur (DK) et l'étiquette de balle (300, 500, 602, 702) présente une largeur extérieure, la largeur extérieure (DT) étant inférieure au diamètre extérieur (DK).

10. Procédé selon l'une des revendications 1 à 9, comprenant en outre :
la fourniture d'une deuxième étiquette de balle (300, 500, 602, 702, 802) présentant des deuxièmes informations d'identification qui correspondent à la deuxième étiquette de balle (300, 500, 602, 702, 802), les deuxièmes informations d'identification étant différentes des informations d'identification de la première étiquette de balle (300, 500, 602, 702, 802) ; et
l'accouplement de la deuxième étiquette de balle (300, 500, 602, 702, 802) à la ficelle (502, 606, 704, 804) à un emplacement espacé de la première étiquette de balle (300, 500, 602, 702, 802) avant l'exécution du processus de mise en balles.

11. Procédé selon l'une des revendications 1 à 7, 9 ou 10, comprenant en outre l'orientation d'une première extrémité (302, 506) des première et deuxième étiquettes de balle (300, 500, 602, 702) par rapport à la ficelle (502, 606, 704, 804) de telle sorte que la première extrémité (302, 506) doit être menée à travers un tendeur de ficelle avant la deuxième extrémité (304, 508) pendant le processus de mise en balles.
